# DEMANDE DE BREVET EUROPEEN

(11) **EP 1 724 975 A1**
(43) Date de publication de la demande: **22.11.2006**
(21) Numéro de dépôt: 05300389.3
(22) Date de dépôt: 19.05.2005
(51) Int. Cl.: H04L 12/56, H04L 12/26

(54) **Dispositif d'analyse de données d'analyse modifiées, en vue de l'optimisation d'un réseau de communication**

(71) Demandeur: EVOLIUM SAS, 75008 Paris (FR)
(72) Inventeur: Fournigault, Lionel, 91460, GIF SUR YVETTE (FR); Betge-Brezetz, Stéphane, 75015, PARIS (FR); Gonguet, Arnaud, 75013, PARIS (FR); Delegue, Gérard, 94230, CACHAN (FR)
(74) Mandataire: Chaffraix, Sylvain

(57) **Abrégé**

Un dispositif (D) est dédié à l'analyse de données d'analyse pour un système d'optimisation et/ou de gestion et/ou de supervision (OO) d'un réseau de communication comportant des éléments de réseau (Ci) par lesquels passent des trafics définis localement par des données d'analyse. Ce dispositif (D) comprend des moyens d'analyse (MA) chargés de déterminer parmi des données d'analyse d'au moins un type choisi, obtenues pendant un intervalle de temps choisi, celles qui ont été modifiées, puis de déterminer parmi ces données d'analyse modifiées celles qui vérifient au moins un critère choisi afin de délivrer des résultats d'analyse représentatifs de certaines au moins des données d'analyse modifiées vérifiant chaque critère choisi, en vue d'une exploitation au moyen du système d'optimisation et/ou de gestion et/ou de supervision de réseau (OO).

## Description

L'invention concerne les réseaux de communication, et plus particulièrement l'optimisation du fonctionnement et/ou de la configuration de tels réseaux.

La supervision et la gestion des réseaux de communication, et notamment ceux de type radio mobiles ou cellulaires (comme par exemple les réseaux GSM, GPRS/EDGE et UMTS), est une tâche de plus en plus difficile. Cela résulte notamment de la densification et/ou de l'extension des réseaux, de la coexistence de technologies de réseau différentes, et de l'amélioration et/ou la diversification de la qualité de service (ou QoS).

Ces supervision et gestion ont notamment pour but d'optimiser les réseaux afin d'utiliser au mieux leurs ressources de communication (notamment les canaux radio dans le cas des réseaux radio mobiles ou cellulaires). Elles sont d'autant plus importantes que les coûts de déploiement et de fonctionnement des réseaux de communication sont élevés.

Pour optimiser un réseau et donc gérer l'utilisation de ses ressources, il faut disposer de données d'analyse, comme par exemple des données de trafic qui définissent les trafics qui passent par les éléments de réseau, ou des paramètres de réseau, ou encore des indicateurs, par exemple de qualité de service (QoS).

On entend ici par « données de trafic » des valeurs de paramètre(s) ou d'indicateur(s) pouvant être mesurées ou estimées par un système de gestion de réseau, comme par exemple un NMS (pour « Network Management System »). Par ailleurs, on entend ici par « élément de réseau » tout constituant (physique et/ou logique) d'un réseau par lequel passent des trafics définis localement par des valeurs de paramètre(s) ou d'indicateur(s). Il pourra donc s'agir, par exemple, d'une cellule dans laquelle des terminaux mobiles peuvent établir ou poursuivre des communications, ou d'un équipement de réseau, tel qu'un routeur ou une station de base ou encore un contrôleur de réseau radio.

Les supervision et gestion des réseaux se font par exemple au moyen d'un système (ou outil) d'optimisation de réseau, comme par exemple celui appelé RNO® (pour « Radio Network Optimization »), développé par la société ALCATEL pour les réseaux radio cellulaires. Un tel système permet de suivre l'évolution de la qualité de service (ou QoS) au sein de certains éléments de réseau, comme par exemple des cellules, de diagnostiquer des causes de problèmes, notamment de qualité de service, et de proposer des solutions pour résoudre ces problèmes.

Les systèmes d'optimisation de réseau actuels permettent d'afficher (ou visualiser), d'une part, la valeur d'une donnée d'analyse (également appelée valeur opérationnelle) et l'écart entre cette valeur et la valeur escomptée pour ladite donnée d'analyse (également appelée valeur planifiée), et d'autre part, l'évolution de la variation d'une donnée d'analyse sur une durée choisie. Cela est certes utile, mais cela n'offre à l'opérateur d'un réseau qu'une vue très partielle de l'évolution de son réseau qui ne lui permet pas de comprendre précisément quelle(s) influence(s) certaines modifications de données d'analyse ou certains réglages peuvent avoir sur son réseau.

L'invention a donc pour but d'améliorer la situation, et plus précisément de permettre aux opérateurs de réseau(x) de disposer d'une analyse de l'historique de données d'analyse selon différents points de vue et de contrôler l'influence des réglages réseau effectués, notamment dans le cas des réseaux de communication radio ou cellulaires.

Elle propose à cet effet un dispositif dédié à l'analyse de données d'analyse, pour un système (ou outil) d'optimisation et/ou de gestion et/ou de supervision d'un réseau de communication comportant des éléments de réseau par lesquels passent des trafics définis localement par des données d'analyse.

Ce dispositif d'analyse se caractérise par le fait qu'il comprend des moyens d'analyse chargés de déterminer parmi des données d'analyse d'au moins un type choisi, obtenues pendant un intervalle de temps choisi, celles qui ont été modifiées, puis de déterminer parmi ces données d'analyse modifiées celles qui vérifient au moins un critère choisi, afin de délivrer des résultats d'analyse représentatifs de certaines au moins des données d'analyse modifiées vérifiant chaque critère choisi, en vue d'une exploitation au moyen du système d'optimisation et/ou de gestion et/ou de supervision de réseau.

Le dispositif d'analyse selon l'invention peut comporter d'autres caractéristiques qui peuvent être prises séparément ou en combinaison, et notamment :
- chaque critère peut être choisi parmi au moins un critère d'importance de modification, un critère d'appartenance à un ensemble de types de données d'analyse choisis, un critère de représentation d'au moins un type choisi d'élément de réseau, un critère d'appartenance à des éléments de réseau situés dans une zone géographique choisie, un critère de corrélation avec au moins un service déployé choisi, et un critère d'écart par rapport à des valeurs escomptées respectives ;
   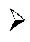 ses moyens d'analyse peuvent être chargés de délivrer les résultats d'analyse sous la forme d'une liste comportant au moins les données d'analyse ayant fait l'objet de la plus importante modification sur l'intervalle de temps choisi tout en vérifiant chaque critère choisi ;
   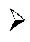 ses moyens d'analyse peuvent être chargés de délivrer les résultats d'analyse sous la forme d'une liste comportant les données d'analyse ayant fait l'objet d'au moins les deux plus importantes modifications sur l'intervalle de temps choisi tout en vérifiant chaque critère choisi. Cette liste peut être éventuellement ordonnée en fonction de l'importance de la modification ;
- ses moyens d'analyse peuvent être chargés de déterminer chaque importance de modification d'une donnée d'analyse en fonction de l'écart entre la valeur de cette donnée d'analyse et sa valeur escomptée ;
- ses moyens d'analyse peuvent être chargés de déterminer le nombre d'éléments d'un même type objets d'une modification pendant l'intervalle de temps choisi ;
- ses moyens d'analyse peuvent être chargés de déterminer la valeur moyenne sur l'intervalle de temps choisi d'une donnée d'analyse modifiée ;
- l'intervalle de temps peut être choisi parmi un jour, une semaine, un mois, un trimestre, un semestre, ou une année ;
- il peut comprendre une interface homme/machine agencée de manière à permettre à un utilisateur de définir des fonctions d'analyse pouvant être mises en oeuvre par les moyens d'analyse.

L'invention propose également un système (ou outil) d'optimisation et/ou de gestion et/ou de supervision d'un réseau de communication, équipé d'un dispositif d'analyse du type de celui présenté ci-avant. Ce système (ou outil) peut être chargé d'afficher certains au moins des résultats d'analyse qui sont délivrés par le dispositif d'analyse afin de permettre leur exploitation visuelle. En variante ou en complément, le système (ou outil) peut être chargé d'effectuer des diagnostics de cause(s) de problème(s) survenant au sein du réseau de communication à partir de résultats d'analyse délivrés par le dispositif d'analyse.

L'invention est particulièrement bien adaptée aux réseaux de communication radio dépendant de l'environnement extérieur, et en particulier aux réseaux de type cellulaire (ou mobile).

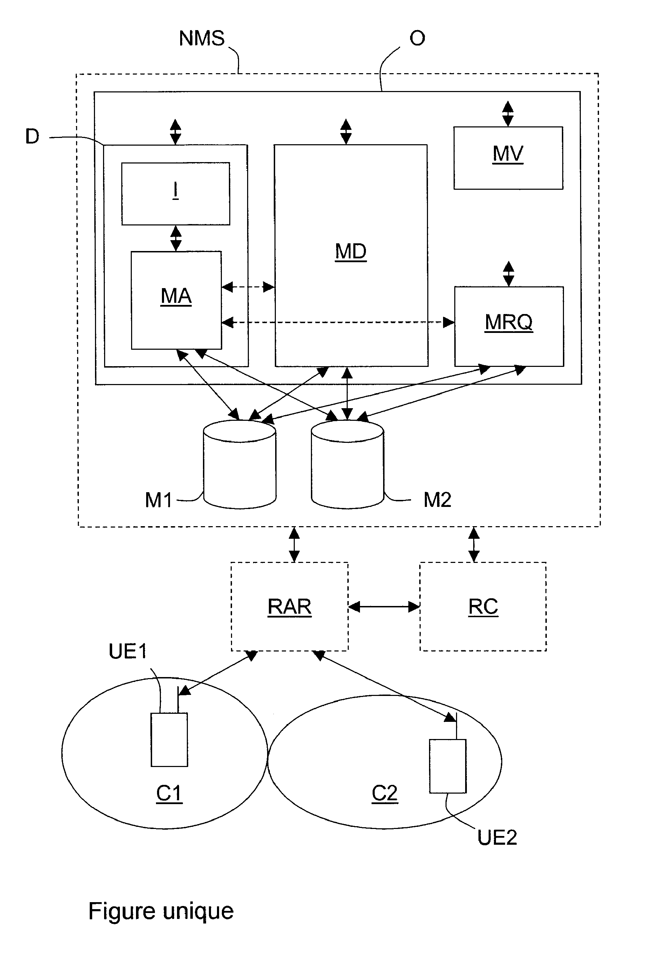

D'autres caractéristiques et avantages de l'invention apparaîtront à l'examen de la description détaillée ci-après, et du dessin annexé, sur lequel l'unique figure illustre de façon très schématique un réseau de communication cellulaire équipé d'un système d'optimisation et/ou de gestion et/ou de supervision de réseau (00) muni d'un exemple de réalisation d'un dispositif d'analyse selon l'invention. Le dessin annexé pourra non seulement servir à compléter l'invention, mais aussi contribuer à sa définition, le cas échéant.

L'invention a notamment pour objet, d'une part, d'offrir une analyse de l'historique de données d'analyse de réseau selon différents points de vue, et d'autre part, de permettre un contrôle de l'influence de certains au moins des réglages effectués au sein d'un réseau.

Dans ce qui suit, on considère à titre d'exemple non limitatif que le réseau de communication est un réseau radio cellulaire (ou mobile), comme par exemple un réseau GSM, ou GPRS/EDGE, ou encore UMTS ou WiMax. Par conséquent, les ressources sont des canaux radio.

Comme cela est illustré sur l'unique figure un réseau radio cellulaire peut, d'une façon très schématique mais néanmoins suffisante à la compréhension de l'invention, être résumé à un coeur de réseau (ou réseau de commutation, ou encore « Core Network ») RC couplé à un réseau d'accès radio RAR (appelé UTRAN dans le cas d'un réseau UMTS et BSS dans le cas d'un réseau GSM ou GPRS/EDGE), lui-même raccordé à un système de gestion de réseau NMS (pour « Network Management System »).

Le réseau d'accès radio RAR comporte des stations de base (appelées Node Bs dans le cas d'un réseau UMTS et BTSs dans le cas d'un réseau GSM ou GPRS/EDGE) et des contrôleurs de réseau radio ou noeuds (appelés RNCs dans le cas d'un réseau UMTS et BSCs dans le cas d'un réseau GSM ou GPRS/EDGE), raccordés entre eux ainsi qu'à un gestionnaire de réseau d'accès. Les stations de base sont par ailleurs reliées au système de gestion de réseau NMS via les contrôleurs de réseau radio.

Chaque station de base (Node B ou BTS) est associée à au moins une cellule Ci couvrant une zone radio dans laquelle des terminaux mobiles UEj peuvent établir (ou poursuivre) des liaisons radio.

On entend ici par « terminal mobile » tout terminal de communication mobile ou portable capable d'échanger des données sous la forme de signaux radio, soit avec un autre terminal ou équipement de réseau, via leur(s) réseau(x) de rattachement, soit avec son propre réseau de rattachement. Il pourra donc s'agir, par exemple, de téléphones mobiles, ou d'ordinateurs fixes ou portables ou d'assistants personnels numériques (ou PDAs (pour « Personal Digital Assistants »)) équipés d'un module de communication radio.

Dans l'exemple illustré, deux cellules (C1 et C2, i = 1 ou 2) ont été représentées. Mais, l'indice i peut prendre n'importe quelle valeur non nulle. Par ailleurs, dans l'exemple illustré, deux terminaux mobiles (UE1 et UE2, j = 1 ou 2) ont été représentés. Mais, l'indice j peut prendre n'importe quelle valeur non nulle.

Le coeur de réseau RC comprend des équipements de réseau raccordés aux contrôleurs de réseau radio (RNCs ou BSCs), à un gestionnaire de réseau, ainsi qu'au système de gestion de réseau NMS.

Le système de gestion de réseau NMS comprend (ou est couplé à) un système (ou outil) d'optimisation et/ou de gestion et/ou de supervision de réseau OO, comme par exemple le système RNO® présenté dans la partie introductive, lequel permet l'optimisation de l'utilisation des ressources de communication du réseau radio (cellulaire).

Comme cela est illustré sur l'unique figure, le système (ou outil) d'optimisation et/ou de gestion et/ou de supervision de réseau 00 comprend par exemple un module de diagnostic MD, chargé de déterminer les causes de problèmes survenant au sein du réseau, comme par exemple une baisse de la qualité de service (ou QoS), et/ou un module de rapport de qualité de service MRQ, chargé de délivrer des rapports relatifs aux différentes qualités de service offertes par le réseau.

Le module de diagnostic MD et le module de rapport de qualité de service MRQ effectuent respectivement leur diagnostics et leurs rapports à partir de l'analyse de valeurs de données d'analyse, parfois appelées valeurs opérationnelles, stockées, en correspondance d'une date, dans une première mémoire M1 du système de gestion de réseau NMS, éventuellement agencée sous la forme d'une base de données. Ils peuvent également utiliser des valeurs complémentaires représentatives des valeurs (dites par défaut) qui sont attendues (ou escomptées) pour certaines au moins des données d'analyse déterminées par le système de gestion de réseau NMS. Ces valeurs complémentaires, qui sont parfois appelées valeurs planifiées, sont stockées dans une seconde mémoire M2 du système de gestion de réseau NMS, éventuellement agencée sous la forme d'une base de données.

Comme indiqué dans la partie introductive, on entend ici par « données d'analyse » des données de trafic, ou des paramètres de réseau, ou encore des indicateurs, par exemple de qualité de service (QoS).

Par ailleurs, on entend ici par « données de trafic » des valeurs de paramètre(s) ou d'indicateur(s) pouvant être mesurées ou estimées par le système de gestion de réseau NMS, notamment au niveau d'éléments de réseau.

De plus, on entend ici par « élément de réseau » tout constituant (physique et/ou logique) d'un réseau par lequel passent des trafics définis localement par des valeurs de paramètre(s) ou d'indicateur(s). Il pourra donc s'agir, par exemple, d'une cellule Ci dans laquelle des terminaux mobiles UEj peuvent établir ou poursuivre des communications, ou d'un équipement de réseau, tel qu'un routeur, ou une station de base (BTS ou Node B), ou encore un contrôleur de réseau radio (BSC ou RNC).

L'invention propose un dispositif d'analyse de données d'analyse D destiné à délivrer des résultats d'analyse en vue de leur exploitation au moyen du système (ou outil) d'optimisation et/ou de gestion et/ou de supervision de réseau 00. Dans l'exemple de réalisation illustré, non limitatif, le dispositif d'analyse D est intégré dans le système (ou outil) d'optimisation et/ou de gestion et/ou de supervision de réseau 00. Mais, dans une variante, il pourrait être couplé à ce système (ou outil) 00.

Selon l'invention, le dispositif d'analyse D comprend au moins un module d'analyse MA chargé, notamment, de déterminer parmi des données d'analyse d'au moins un type choisi, obtenues pendant un intervalle de temps choisi, celles qui ont été modifiées.

Ces données d'analyse (ou valeurs opérationnelles) sont celles qui sont stockées dans la première mémoire M1 en correspondance d'une date.

La durée de l'intervalle de temps peut varier en fonction des besoins de l'analyse. Il peut par exemple être égal à un jour, une semaine, un mois, un trimestre, un semestre, ou une année.

On entend ici par « données d'analyse modifiées », des données d'analyse représentatives d'un même trafic, éventuellement au niveau d'un élément de réseau, et faisant l'objet d'une variation au cours d'un intervalle de temps choisi.

Les données d'analyse peuvent être par exemple des paramètres de configuration, ou des données de cartographie, ou encore des données de qualité de service (QoS).

Le module d'analyse MA peut être configuré de manière à ne retenir que les données d'analyse dont l'amplitude maximale des variations (ou modifications) sur l'intervalle de temps choisi est supérieure à un seuil absolu ou relatif (pourcentage de dépassement), pouvant varier d'un type de données d'analyse à un autre.

Le module d'analyse MA peut déterminer l'amplitude d'une modification soit par comparaison interne des données d'analyse d'un même type sur l'intervalle de temps choisi, soit par comparaison de chaque donnée d'analyse d'un même type, appartenant à l'intervalle de temps choisi, à la valeur par défaut escomptée correspondante (stockée dans la seconde mémoire M2).

Chaque fois que le module d'analyse MA a déterminé un ensemble de données d'analyse modifiées, d'au moins un type choisi, il détermine parmi ces dernières celles qui vérifient au moins un critère choisi.

De très nombreux critères peuvent être choisis. Le nombre de critères qui peuvent être utilisés pour une même analyse, et leurs types respectifs, dépendent du type de l'analyse. Parmi ces critères on peut notamment citer :
- un critère d'importance de modification. II s'agit ici de sélectionner parmi les données d'analyse modifiées soit celle qui présente la modification la plus importante dans l'absolue ou en relatif, soit celles qui présentent les n modifications les plus importantes dans l'absolue ou en relatif, n étant strictement supérieur à un (1). L'amplitude d'une modification peut se déterminer soit par comparaison interne des données d'analyse d'un même type sur l'intervalle de temps choisi, soit par comparaison de chaque donnée d'analyse d'un même type, appartenant à l'intervalle de temps choisi, à la valeur par défaut escomptée correspondante (stockée dans la seconde mémoire M2). Par exemple, on peut sélectionner les deux (n=2), ou les cinq (n=5), ou encore les dix (n=10) plus importantes ;
- un critère d'appartenance à un ensemble de types de données d'analyse choisis. Il s'agit ici de sélectionner parmi les données d'analyse modifiées certaines au moins de celles dont les types respectifs appartiennent à un ensemble choisi (comme par exemple l'ensemble des (ou un sous-ensemble de) données utiles à un opérateur de télécommunication) ;
- un critère de représentation d'au moins un type choisi d'élément de réseau. Il s'agit ici de sélectionner parmi les données d'analyse modifiées certaines au moins de celles qui représentent, ou correspondent à, au moins un même type choisi d'élément de réseau. Par exemple, on peut sélectionner certaines au moins des données d'analyse qui concernent un groupe de cellules, lesquelles appartiennent éventuellement à une zone géographique choisie ;
- un critère d'appartenance à des éléments de réseau situés dans une zone géographique choisie. II s'agit ici de sélectionner parmi les données d'analyse modifiées certaines au moins de celles qui représentent, ou correspondent à, tous les types d'élément de réseau qui se trouvent situés dans une même zone géographique choisie. Par exemple, on peut sélectionner certaines au moins des données d'analyse qui concernent un groupe de cellules (ce qui regroupe les cellules mais également leurs stations de bases respectives, ainsi qu'éventuellement leurs contrôleurs de réseau respectifs). Cela permet notamment d'effectuer des corrélations géographiques ;
- un critère de corrélation avec au moins un service déployé choisi. Il s'agit ici de sélectionner parmi les données d'analyse modifiées certaines au moins de celles qui correspondent, ou sont corrélées, à au moins un service déployé choisi (comme par exemple celles appartenant à un sous-ensemble de données utiles à un opérateur de télécommunication). Cela permet notamment de déterminer l'influence réelle de modifications apportées au réseau sur un service choisi, anciennement ou nouvellement implanté, et réciproquement l'influence de l'implantation d'un nouveau service ou du retrait d'un ancien service sur des données d'analyse.

Comme indiqué ci-avant, on peut combiner certains critères. Ainsi, le critère d'importance de modification peut être notamment combiné avec le critère d'appartenance à un ensemble de types de données d'analyse choisis, ou le critère de représentation d'au moins un type choisi d'élément de réseau, ou le critère d'appartenance à des éléments de réseau situés dans une zone géographique choisie, ou le critère de corrélation avec au moins un service déployé choisi.

Des combinaisons de trois critères, voire même plus, peuvent être utilisées. Ainsi, on peut par exemple combiner le critère d'importance de modification, le critère de représentation d'au moins un type choisi d'élément de réseau, et le critère d'appartenance à des éléments de réseau situés dans une zone géographique choisie. D'une manière générale, les combinaisons importantes dépendent du contexte et du type du réseau radio.

Une fois que le module d'analyse MA à sélectionné les données d'analyse modifiées qui vérifient chaque critère choisi, il délivre des résultats d'analyse qui représentent certaines au moins d'entre elles.

L'utilisation du critère d'importance de modification permet notamment au module d'analyse MA de délivrer des résultats d'analyse sous la forme d'une liste comportant au moins les données d'analyse qui ont fait l'objet de la plus importante modification sur la durée choisie tout en vérifiant chaque critère choisi. Bien entendu, chaque liste peut comporter les données d'analyse qui ont fait l'objet des deux plus importantes modifications (au moins) sur l'intervalle de temps choisi, tout en vérifiant chaque critère choisi. Par exemple, la liste peut contenir les cinq (5) ou dix (10) données d'analyse ayant fait l'objet des cinq ou dix plus importantes modifications.

De telles listes peuvent être éventuellement ordonnées en fonction de l'importance de la modification. Par exemple, la liste peut citer les données d'analyse en partant de celle qui présente la plus importante modification jusqu'à celle qui présente la moins importante modification, ou inversement.

Grâce à ces listes, on peut par exemple connaître les dix cellules les plus modifiées chaque mois, ou les dix types de données d'analyse (ou valeurs opérationnelles) les plus modifiés sur un intervalle de temps choisi, éventuellement pour une ou plusieurs cellules choisies (ou tout autre type d'élément de réseau) et/ou pour une zone géographique choisie, ou encore les dix données d'analyse (ou valeurs opérationnelles) dont les écarts par rapport à leurs valeurs escomptées (ou planifiées) sont les plus importants sur un intervalle de temps choisi.

Le module d'analyse MA peut être également chargé d'effectuer des traitements statistiques sur des données d'analyse (valeurs opérationnelles) pour lesquelles il a détecté une modification sur un intervalle de temps choisi. Ces traitements statistiques peuvent être effectués sur les données d'analyse modifiées, avant ou après application du (ou des) critère(s) choisi(s). Tout type de traitement statistique peut être envisagé.

Par exemple, le module d'analyse MA peut être chargé de déterminer le nombre d'éléments de réseau d'un même type qui ont fait l'objet d'une modification pendant un intervalle de temps choisi. Cela peut notamment permettre de déterminer le nombre de cellules Ci modifiées chaque semaine.

Par exemple, le module d'analyse MA peut être chargé de déterminer la valeur moyenne sur un intervalle de temps choisi d'une donnée d'analyse ayant fait l'objet d'une modification pendant ledit intervalle de temps choisi.

Les résultats de ces traitements statistiques peuvent constituer des résultats d'analyse délivrés tels quels par le module d'analyse MA. Mais, le module d'analyse MA peut également leur appliquer un ou plusieurs critères, du type de ceux présentés ci-avant, afin de sélectionner certains d'entre eux de manière à les délivrer sous la forme de résultats d'analyse.

Comme cela est illustré sur l'unique figure, le dispositif d'analyse D peut également comporter une interface homme/machine I agencée de manière à permettre à un utilisateur de définir des fonctions d'analyse autres que celles prédéfinies, et présentées ci-avant, et pouvant être mises en oeuvre par son module d'analyse MA. Cette interface, qui est de préférence de type interface de lignes de commandes SQL, permet à l'opérateur d'obtenir, via des requêtes SQL génériques, des informations qui ne sont pas directement disponibles au moyen des fonctions d'analyse « standards » du module d'analyse MA.

Par exemple une requête peut consister à rechercher des paramètres x et y modifiés entre des dates d1 et d2 et dont les valeurs par rapport à celles prévues par la planification sont à plus ou moins 10 % pour des zones géographiques g1 et g2. D'une manière générale, tout type de requête en langage SQL peut être envisagé.

Les résultats des analyses sont délivrés par le dispositif d'analyse D en vue d'une exploitation au moyen du système d'optimisation et/ou de gestion et/ou de supervision de réseau 00. Cette exploitation peut être de deux types. Elle peut être soit « active », soit « passive ».

On entend ici par « exploitation passive » un affichage, après une éventuelle mise en forme graphique, éventuellement comparative. Pour ce faire, et comme illustré sur l'unique figure, le système d'optimisation et/ou de gestion et/ou de supervision de réseau 00 peut comporter un module d'affichage (ou de visualisation) MV. L'affichage graphique peut par exemple permettre d'afficher chaque valeur opérationnelle (données d'analyse modifiée), sélectionnée par le dispositif d'analyse D, et la valeur planifiée (ou escomptée) correspondante.

Par ailleurs, on entend ici par « exploitation active » soit une utilisation par un autre module, comme par exemple le module de diagnostic MD, afin qu'il détermine des éléments de réseau posant problème et tente de trouver la (ou les) cause(s) de ce(s) problème(s), ou le module de rapport de qualité de service MRQ, afin qu'il effectue des analyses de la qualité de service (QoS), soit une mise en correspondance avec d'autres résultats, comme par exemple des résultats d'un diagnostic délivrés par le module de diagnostic MD, afin de tenter de trouver une correspondance entre eux. La mise en correspondance peut être faîte par le module de diagnostic MD. Elle peut se traduire soit par un traitement comparatif aboutissant à des résultats pouvant être affichés grâce au module d'affichage MV, soit par un simple affichage comparatif par le module d'affichage MV en vue d'une analyse par l'opérateur.

Le dispositif d'analyse D selon l'invention, et notamment son module de d'analyse MA et une partie au moins de son éventuelle interface homme/machine I, peuvent être réalisés sous la forme de circuits électroniques, de modules logiciels (ou informatiques), ou d'une combinaison de circuits et de logiciels.

L'invention permet à l'opérateur d'un réseau, grâce à l'analyse de l'historique des données d'analyse dudit réseau, d'avoir une meilleure connaissance de l'évolution de son réseau, d'améliorer son expertise, et de mieux superviser et/ou gérer son réseau, notamment lorsqu'il est étendu et/ou multi-standards, du fait de la connaissance d'une partie au moins de l'influence des modifications apportées audit réseau.

L'invention ne se limite pas aux modes de réalisation de dispositif d'analyse et de système d'optimisation et/ou de gestion et/ou de supervision de réseau décrits ci-avant, seulement à titre d'exemple, mais elle englobe toutes les variantes que pourra envisager l'homme de l'art dans le cadre des revendications ci-après.

## Revendications

1. Dispositif d'analyse de données d'analyse (D), pour un système d'optimisation et/ou de gestion et/ou de supervision (00) d'un réseau de communication comportant des éléments de réseau (Ci) par lesquels passent des trafics définis localement par des données d'analyse, **caractérisé en ce qu'**il comprend des moyens d'analyse (MA) agencés pour déterminer parmi des données d'analyse d'au moins un type choisi, obtenues pendant un intervalle de temps choisi, celles ayant été modifiées, puis pour déterminer parmi lesdites données d'analyse modifiées celles qui vérifient au moins un critère choisi de manière à délivrer des résultats d'analyse représentatifs de certaines au moins des données d'analyse modifiées vérifiant chaque critère choisi, en vue d'une exploitation au moyen dudit système d'optimisation et/ou de gestion et/ou de supervision de réseau (00).

2. Dispositif selon la revendication 1, **caractérisé en ce que** chaque critère est choisi dans un groupe comprenant au moins un critère d'importance de modification, un critère d'appartenance à un ensemble de types de données d'analyse choisis, un critère de représentation d'au moins un type choisi d'élément de réseau, un critère d'appartenance à des éléments de réseau situés dans une zone géographique choisie, un critère de corrélation avec au moins un service déployé choisi, et un critère d'écart par rapport à des valeurs escomptées respectives.

3. Dispositif selon la revendication 2, **caractérisé en ce que** lesdits moyens d'analyse (MA) sont agencés pour délivrer lesdits résultats d'analyse sous la forme d'une liste comportant au moins les données d'analyse ayant fait l'objet de la plus importante modification sur ledit intervalle de temps choisi tout en vérifiant chaque critère choisi.

4. Dispositif selon la revendication 2, **caractérisé en ce que** lesdits moyens d'analyse (MA) sont agencés pour délivrer lesdits résultats d'analyse sous la forme d'une liste comportant les données d'analyse ayant fait l'objet d'au moins les deux plus importantes modifications sur ledit intervalle de temps choisi tout en vérifiant chaque critère choisi.

5. Dispositif selon la revendication 4, **caractérisé en ce que** lesdits moyens d'analyse (MA) sont agencés pour délivrer lesdits résultats d'analyse sous la forme d'une liste ordonnée en fonction de l'importance de la modification.

6. Dispositif selon l'une des revendications 1 à 5, lesdits moyens d'analyse (MA) sont agencés pour déterminer l'importance de la modification d'une donnée d'analyse en fonction de l'écart entre la valeur de cette donnée d'analyse et une valeur escomptée correspondante.

7. Dispositif selon l'une des revendications 1 à 6, lesdits moyens d'analyse (MA) sont agencés pour déterminer le nombre d'éléments d'un même type objets d'une modification pendant ledit intervalle de temps choisi.

8. Dispositif selon l'une des revendications 1 à 7, lesdits moyens d'analyse (MA) sont agencés pour déterminer la valeur moyenne sur ledit intervalle de temps choisi d'une donnée d'analyse modifiée.

9. Dispositif selon l'une des revendications 1 à 8, **caractérisé en ce que** ledit intervalle de temps est choisie dans un groupe comprenant au moins un jour, une semaine, un mois, un trimestre, un semestre et une année.

10. Dispositif selon l'une des revendications 1 à 9, **caractérisé en ce qu'**il comprend une interface homme/machine (1) agencée pour permettre à un utilisateur de définir des fonctions d'analyse propres à être mises en oeuvre par lesdits moyens d'analyse.

11. Système d'optimisation et/ou de gestion et/ou de supervision de réseau (00) pour un réseau de communication comportant des éléments de réseau (Ci) par lesquels passent des trafics définis localement par des données d'analyse, **caractérisé en ce qu'**il comprend un dispositif d'analyse (D) selon l'une des revendications précédentes.

12. Système d'optimisation et/ou de gestion et/ou de supervision de réseau selon la revendication 11, **caractérisé en ce qu'**il est agencé pour afficher certains au moins desdits résultats d'analyse délivrés par ledit dispositif d'analyse (D) de manière à permettre leur exploitation visuelle.

13. Système d'optimisation et/ou de gestion et/ou de supervision de réseau selon l'une des revendications 11 et 12, **caractérisé en ce qu'**il est agencé pour effectuer des diagnostics de cause(s) de problème(s) survenant au sein dudit réseau de communication à partir de résultats d'analyse délivrés par ledit dispositif d'analyse (D).
